# NEW EUROPEAN PATENT SPECIFICATION

(11) **EP 0 575 596 B2**
(45) Date of publication and mention of the opposition decision: **16.05.2001**
(45) Mention of the grant of the patent: 14.02.1996
(21) Application number: 93902579.7
(22) Date of filing: 11.01.1993
(51) Int. Cl.: C08G 73/02

(54) **DENDRITIC MACROMOLECULE AND THE PREPARATION THEREOF**
DENDRITISCHES MAKROMOLECÜL UND VERFAHREN ZU SEINER HERSTELLUNG
MACROMOLECULE DENDRITIQUE ET PROCEDE DE PREPARATION

(30) Priority: 13.01.1992 NL 9200043; 12.11.1992 EP 92203481
(43) Date of publication of application: 29.12.1993
(73) Proprietor: DSM N.V., 6411 TE Heerlen (NL)
(72) Inventor: DE BRABANDER-VAN DEN BERG, Ellen, Marleen, Monique, NL-6166 HX Geleen (NL); MEIJER, Egbert, Willem, NL-5583 XG Waalre (NL); VANDENBOOREN, Franciscus Henricus Antonius Maria J, NL-6213 JR Maastricht (NL); BOSMAN, Hubertus, Johannes, Mechtilda, NL-6135 EN Sittard (NL)
(86) International application number: NL9300008
(87) International publication number: WO9314147

(56) References cited:
- EP-A- 0 115 771
- DE-A- 2 714 403
- DE-A- 3 248 326
- E. Buhlmeier et al, "Cascade and Nonskid-Chain-like Syntheses of Molecular Cavity Topologies", Synthesis, 1978, pp.155-158
- D. A. Tomalia et al, "A New Class of Polymers: Starburst-Dendritic Macromolecules", Polymer J., vol. 17, no. 1, 1985, pp. 117-132
- Organikum, 16th ed., 1986, pp. 431-433, 655
- W. Beyer, Lehrbuch der organischen Chemie, 19th ed., 1981, p. 155
- G. R. Newkome et al, Dendritic Molecules, VCH, 1996, pp. 15-36

## Description

The invention relates to a dendritic macromolecule comprising a core and branches emanating from the core.

Dendritic macromolecules are three-dimensional, highly ordered oligomeric and polymeric molecules with a very good defined chemical structure. Such molecules are known and are described by for example D.A. Tomalia et al. in Angew.Chem.Int.Ed.Engl. 29 (1990), pp. 138-175. This publication describes a number of different dendritic macromolecules, for example polyamidoamine (PAMAM) dendrimers, which are also described in US-A-4507466, and polyethylene imine (PEI) dendrimers, which are also described in US-A-4631337.

The applications envisaged for dendritic macromolecules are as diverse as they are numerous. The aforementioned publications mention several possible applications, for example electronic applications, applications for the calibration of sieves, catalysts (and catalyst supports), selective membranes and coatings, but applications as impact modifiers or as cross-linking agents in several plastics could also be considered.

A drawback of the aforementioned dendritic macromolecules, however, is that they are very sensitive to degradation through hydrolysis reactions, while PAMAM dendrimers in particular are moreover not stable at an elevated temperature, which means that these macromolecules degrade significantly when they are exposed to higher temperatures.

The aim of the invention is to provide a dendritic macromolecule that is very insensitive to degradation through hydrolysis reactions and also has very good thermal stability.

The dendritic macromolecule according to the invention is characterised in that the branches are prepared from vinyl-cyanide units. It has been found that the dendritic macromolecule according to the invention has very good thermal stability while it is also very insensitive to degradation through hydrolysis reactions. In addition, the dendritic macromolecule according to the invention has a very compact structure.

Dendritic macromolecules, also known as dendrimers or stellar dendrites, are three-dimensional, highly ordered oligomeric and polymeric molecules with a good defined chemical structure. These macromolecules are formed with the aid of alternate reaction steps, starting from a core or an initiator core. Usually the reactions occurring during the synthesis are virtually complete and selective reactions, which means that no or virtually no undesired side-reactions take place and a dendritic macromolecule is obtained that has a good defined chemical structure. Figure 1 shows a two-dimensional projection of an example of a dendritic macromolecule:

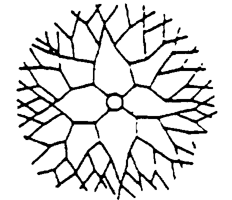

The molecules that can be used as a core according to the present invention are molecules that contain at least one functional group. Within the framework of the invention a functional group is a group that - optionally in the presence of a suitable catalyst - can react with a vinyl-cyanide unit. Groups which under favourable reaction conditions can react with a vinyl-cyanide unit are for example hydroxyl groups, primary and secondary amine groups, thiol groups, carbon compounds with electronegative substituents, such as ester groups, amide groups, ketone groups, aldehyde groups, carboxylic acid groups and salts thereof. Preferably the core contains a hydroxyl group, a primary amine group and/or a secondary amine group as a core.

Dependent on the nature of the functional group, it may react with one or several vinyl-cyanide units. If a functional group can react with F vinyl-cyanide units this functional group has a functionality F. A hydroxyl group can react with one vinyl-cyanide unit and hence has a functionality, F, of 1. A primary amine group can react with two vinyl-cyanide units and hence has a functionality, F, of 2. In general, the functionality F has a value of 1, 2 or 3.

A molecule is a suitable core if it contains at least one functional group G. This molecule preferably contains 1-10 functional groups G. A suitable core can for example be chosen from the group comprising ammonia, water, methanol, polymethylenediamines, diethylenetriamine, diethylenetetramine, tetraethylenepentamine, linear and branched polyethylene imine, methylamine, hydroxyethylamine, octadecylamine, polyaminoalkylarenes, such as 1,3,5-tris(aminomethyl) benzene, tris(aminoalkyl)amines, such as tris(aminoethyl)amine, heterocyclic amines, such as imidazolines and piperidines, hydroxyethylaminoethylamine, mercaptoethyl amine, morpholine, piperazine, pentaerythritol, sorbitol, mannitol, duleitol, inositol, polyalkylenepolyols, such as polyethylene glycol and polypropylene glycol, glycols, such as ethylene glycol, 1,2-dimercaptoethane, polyalkylene polymercaptans, phosphine, e-aminocaproic acid, glycine, thiophenols, phenols, melamine and derivatives thereof, such as melamine tris(hexamethylenediamine). In the process according to the invention use is preferably made of a core that is chosen from the group comprising polymethylene diamines, glycols and tris(1,3,5-aminomethyl)benzene. Polymethylenediamines, that are more preferably used as a core are hexamethylenediamine, ethylenediamine and 1,4-diaminobutane (DAB). Most preferably 1,4-diaminobutane is used as a core.

If so desired it is also possible to use a (co)polymer containing the above functional groups as a core for the dendritic macromolecule. Examples of such (co)polymers are styrene-maleimide copolymer, styrene-acrylonitrile copolymer, polyethyleneimine and polymers such as polypropylene oxide. polystyrene and ethylene-propylenediene copolymers that are functionalised with one or more of the above functional groups such as NH₂ groups.

The shape of the chosen core largely determines the shape of the macromolecule. If a small molecule is used as a core a spherical shape can be obtained. If use is made of a polymer the dendritic macromolecule obtained will have a more longitudinal shape.

A number of branches that are prepared from vinyl-cyanide units emanate the core. If the reactions that take place are complete reactions the total number of branches of the desired generation N can be calculated as follows. If G is the number of functional groups that the core contains and F is the functionality of each individual functional group, then the number of reactive sites R of the core equals the sum of the functionalities F of all of the functional groups G. The maximum number of branches of the N^{th} generation can be described as the number of reactive sites R multiplied by 2^{N-1}. If the reactions that take place remain incomplete then the number of branches will be smaller, i.e. between R and (R*2^{N-1}). The dendritic macromolecule contains 2-10 generations of branches, preferably 3-10, in particular 3-9.

The molecular weight of the dendritic macro-molecules according to the invention is 1600 - 1,000,000 preferably 1600 - 100 000.

In DE-OS-27 14 403 is disclosed alkenylsuccinic imides as well as a process for the preparation of said imides, used as motor oil additives. Said imides have improved properties over existing alkenylsuccinic imides, used as dispersion agents, rust-preventing agents and anti-foaming agents in motor oil. More specifically is described a chemical compound, equivalent to a modified first generation dendritic macromolecule with a core prepared from diaminoethane, with 4 branches prepared from acrylonitrile and with functional end groups, partly modified into tetrapolyisobutenylsuccinic imide groups, as well as the preparation of said chemical compound. Said compound has a molecular weight (M_{W}) of about 4,000. Said compound is therefore a first generation dendritic macromolecule according to our invention. Dendritic compounds of the first generation (N=1) are therefore explicitly excluded from patent protection.

Vinyl-cyanide units that are suitable in the light of the present invention contain a double bond and also an electron-attracting group that is directly conjugated to this double bond and they may be chosen from the group of compounds of formula 1: 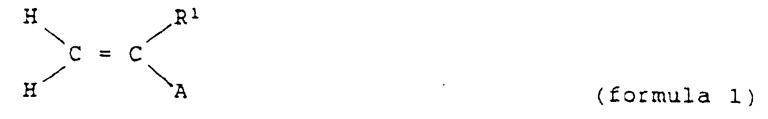 where
- R¹ =: -H or -CH₃;
- A =: -C≡N;
- R² =: a hydrocarbon compound with 1-18 carbon atoms that contains 1-5 cyanide groups.

Very suitable vinyl-cyanide units that can be used are acrylonitrile and methacrylonitrile (MACN).

The dendritic macromolecule comprises a core, as described in the aforementioned section, and branches. The branches of the dendritic macromolecule comprise at least four units of formula 2: 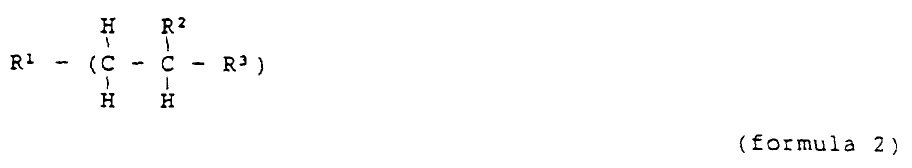 where
- R¹ =: the core or a unit of the previous generation;
- R² =: -H or -CH₃;
- R³ =: 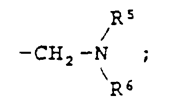
- R⁴ =: a hydrocarbon compound with 1-18 carbon atoms that contains between 1 and 5 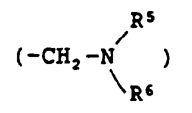 groups;
- R⁵ =: H or a unit of the next generation;
- R₆ =: H or a unit of the next generation, where groups R⁵ and R⁶ in each 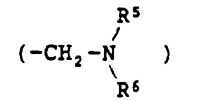 group may be the same or may differ from one another.

The branches usually contain fewer than 1000, preferably fewer than 250, units of formula 2. The branches preferably comprise more than 6, in particular more than 10 units of formula 2. Optionally, the branches of the dendritic macromolecules contain different units of formula 2.

The invention also relates to a process with which the dendritic macromolecule according to the present invention can be prepared.

Angew.Chem.Int.Ed.Engl. 29 (1990), pp. 138-175, describes two synthesis procedures with which dendritic macromolecules can be prepared. During one synthesis procedure, the so-called 'protected group method', the composition of the dendritic macromolecules, i.e. polyethyleneimine (PEI) dendrimers, is very accurately controlled via the strategic use of protected groups, which prevents undesired side reactions and undesired defects in the structure of the dendritic macromolecules. During the other synthesis procedure, the so-called 'excess reagent method', with which for example polyamidoamine (PAMA) dendrimers are prepared, use is made of a very large excess of reagents, which statistically minimises the risk of undesired reactions and defects.

The aforementioned 'protected group method' is based on the presence of protected aziridine rings. The aziridine rings are opened with the aid of primary amines, after which the deprotection is effected with the aid of a strong acid. The complex isolation procedures, the low yield of the synthesis procedure and the use of expensive reagents make this method for the preparation of dendritic macromolecules unsuitable for large-scale application.

The aforementioned 'excess reagent method' includes as a reaction step the complete Michael condensation of primary amine groups to methyl methacrylate, followed by amidation using ethylenediamine. However, the synthesis of the polyamidoamine dendrimers thus formed requires a very large excess of reagents to prevent undesired side reactions. This drawback is also described by D.A. Tomaloa in Angew.Chem.Int.Ed.Engl. 29 (1990), p. 148. The greater part of the excess amount of reagents is removed through evaporation in for example a Rotavapor, after which the last remains of the reagents are removed from the viscous reaction product in a precipitation step. The intermediate product between the various synthesis steps must however be completely pure, which means that the precipitation step has to be repeated several times. These complicating factors make this synthesis procedure for dendritic macromolecules also unsuitable for large-scale application.

The drawbacks of each of the aforementioned synthesis procedures are so great that the use of these procedures on a large - and hence commercially attractive - scale involves insurmountable problems, as also already commented by J. Alper in Science 251 (March 1991), pp. 1562-1564: 'The main stumbling block to most of these applications is that large-scale synthetic methods remain to be developed.'

The present invention provides a process for the preparation of dendritic macromolecules that does not present the above drawbacks.

The process for the preparation of the dendritic macromolecule according to the invention is characterised in that it comprises steps a) through c):
a) substantially every functional group of the core is caused to react with a vinyl-cyanide unit:
b) substantially every incorporated nitrile unit is reduced to an amine group;
c) substantially every amine group is caused to react with vinyl-cyanide units;
of which steps b) and c) are carried out alternately (N-1) times to obtain a macromolecule of the desired generation N. The value of N usually varies from 1 to 10; preferably N has a value of 3-10. It is possible to stop the preparation process after reaction step b). This results in a dendritic macromolecule of generation 1½, 2½ or higher. In the light of the present invention substantially usually means at least 80%. Preferably, this is at least 90%, more preferably at least 95%, most preferably at least 99%.

It has been found that the synthesis procedure for the preparation of the dendritic macromolecule according to the invention does not present the aforementioned drawbacks, which means that this method is very suitable for use on a large scale. Moreover, with the process according to the invention it is not necessary to each time isolate and purify the product obtained in the individual intermediate steps. Hence the dendritic macromolecule according to the present invention can be obtained on a large scale in a simple manner.

In step a) of the process according to the invention substantially every functional group of the core with a functionality F is caused to react with F vinyl-cyanide units. The ensuing reaction, for example the Michael condensation of a primary amine group to a vinyl-cyanide unit, usually takes place in solution. The solvent used for this purpose is usually chosen so that neither the course of the ensuing reactions nor the non-occurrence of undesired side reactions are adversely affected. It is hence important that the solvent used does not react with the functional groups of the core under the reaction conditions used. Such solvents can be chosen from for example the group comprising water, tetrahydrofuran, various alcohols, such as methanol, ethanol, isopropanol and the like, various ethers, and mixtures of these solvents. The solvent that is finally to be chosen will depend greatly on the nature of the functional groups of the core. Preferably water, methanol, or a mixture of the two is used as a solvent.

If it is desirable to cause every reactive site R of the core to react with a vinyl-cyanide unit during this reaction step then the ratio of the reagents, which can be described as the ratio of the number of vinyl-cyanide units to the number of reactive sites, must be at least 1. Usually this ratio is between 1 and 5, more preferably between 1 and 3. If this ratio is less than 1 then not every reactive site R will react with a vinyl-cyanide unit.

The temperature during step a) is usually between 0 and 100°C, preferably between 5 and 70°C.

Optionally, a catalyst is added to the reaction mixture during step a) so as to ensure that the reaction of the functional groups with the vinyl-cyanide units proceeds well. Examples of suitable catalysts are weak acids, for example acetic acid. Usually the amount of catalyst that is added to the reaction mixture is 0-5 mol.%, relative to the number of reactive sites R.

In step b) of the process according to the invention substantially every incorporated vinyl-cyanide unit is reduced to an amine group, preferably a primary amine group. If the incorporated vinyl-cyanide unit is acrylonitrile a propylamine (PA) unit is thus formed. The ensuing reduction reaction usually takes place in solution. The solvent used for this purpose is usually chosen from the group comprising diamines (for example alkanediamines such as ethylenediamine), water, ammonia, various alcohols, such as methanol, ethanol, isopropanol and the like, various ethers, such as tetrahydrofuran and dioxane, and mixtures of these solvents. Preferably, water, methanol, ethyldiamine, 1,3-aminopropane or a mixture of these solvents is used as a solvent.

The reduction reaction may for example be effected by causing the incorporated vinyl-cyanide unit to react with H₂ gas. If complete reduction is desired, the H₂/nitrile groups molar ratio must be at least 2. If the molar is ratio is smaller than 2 complete reduction will not take place. Usually the reduction step is carried out in the presence of a suitable catalyst. In general use is made of a reducing catalyst, preferably a heterogeneous reducing catalyst.

The catalyst that is used according to the invention is a catalyst that comprises a metal from group VIII of the periodic system of the elements as shown in the cover of the Handbook of Chemistry and Physics, 58th edition, CRC Press, 1977-1978. It is known that metals of group VII I are active in the hydrogenation of nitriles. See for example EP-A-0077911. Very suitable are nickel, cobalt, platinum, palladium and rhodium. In order to posses sufficient catalytic activity, the metal must have a large contact surface. The metal may be used as such or it may be applied to a suitable carrier.

Particularly suitable for use as a catalyst according to the invention is Raney nickel or Raney cobalt. See US-A-1628190 for a description of these Raney catalysts and their preparation.

Raney nickel comprises substantially nickel and aluminium, the latter being in the form of metallic aluminium, aluminium oxides or aluminium hydroxides. Small amounts of other metals, such as iron and/or chromium, in elemental or bound form, may be added to the Raney nickel to increase its activity and selectivity in the hydrogenation of particular groups of compounds. It is known that Raney nickel promoted with iron and/or chromium is extremely suitable for the reduction of nitrile groups; see for example S.R. Montgomery, Catalysis of Organic Reactions 5, pp. 383-409 (1981).

Raney cobalt also contains aluminium and may be provided with promoters. It is known for example that Raney cobalt promoted with chromium is very suitable for the hydrogenation of nitriles.

Before use, the Raney nickel or cobalt catalyst is often pretreated with an alkaline solution, for example KOH or NaOH, to favourably influence the selectivity of the reduction reaction. The amount of hydroxide to be used for this purpose depends on the amount of catalyst. Usually use is made of between 0.01 and 0.2 gram of hydroxide per gram of catalyst (dry weight). Preferably use is made of between 0.03 and 0.18 gram of hydroxide per gram of catalyst, most preferably of between 0.05 and 0.15 gram of hydroxide per gram of catalyst. The pretreatment is carried out by dissolving the desired amount of hydroxide in the smallest possible amount of suitable solvent, for example water, after which the solution obtained is added to the catalyst which has been rinsed with water beforehand. The mixture thus obtained is intensively stirred.

The concentration of the catalyst, relative to the total weight of the reaction mixture, is usually between 1 and 35 wt.%, preferably between 5 and 20 wt.%, most preferably between 6 and 12 wt.%.

The reduction reaction (step b) may be carried out in for example a sealed reactor, in a H₂ atmosphere. The hydrogen pressure in this sealed reactor is usually between 1 and 500 bar, preferably between 10 and 200 bar, most preferably between 10 and 100 bar. The reaction temperature is not critical; usually it is between 0 and 200°C, preferably between 10 and 100°C.

In step c) of the process according to the invention substantially every functional group is caused to react with vinyl-cyanide units (Michael condensation reaction). If the functional group is a primary amine group, it can react with two vinyl-cyanide units. The reaction conditions during this reaction step may be chosen so that they are the same as those during reaction step a).

When reaction steps a) through c) are carried out once a second-generation (N=2) dendritic macromolecule is obtained. A higher-generation dendritic macromolecule can be obtained by alternately repeating reaction steps b) and c). If reaction steps b) and c) are carried out alternately N times a (N+1)^{th}-generation dendritic macromolecule is obtained. If so desired, the reaction product can be isolated after reaction step b) to obtain a dendritic macromolecule of a generation 1.5, 2.5 or higher. The reaction product obtained can be isolated after any chosen reaction step.

The dendritic macromolecule obtained may optionally be entirely or partially modified with all kinds of functional groups. This may for example be effected through the complete or partial reaction of the amine or nitril groups present, optionally in the presence of a suitable catalyst, with suitable reagents. Examples of such reagents are inorganic acids, such as HCI, unsaturated aliphatic esters and amides, such as acrylic ester, methacrylic ester, crotylic ester and acrylamide, acid halides, such as acid chloride, acryloyl chloride, alkyl halides, such as ethyl bromoacetate and allyl bromide, aryl halides, such as benzyl chloride, hydroxyethylmethacrylate, tosyl halides, such as tosyl chloride, anhydrides, such as maleic anhydride, phthalic anhydride, dicarboxylic acids, such as terephthalic acid and adipic acid, oxiranes such as ethyleneoxide and epichlorohydrin,, (a)cyclic aldehydes, such as formaldehyde, ethanal and hexanal, p-formylphenylacetic acid and 1,4,5,8-naphthalenetetraacetaldehyde.

The resulting dendritic macromolecules have chain-ends. that are entirely or partly modified with functional groups. These functional groups are -for example-chosen from the group of amine, nitril, hydroxide, ester, acid, salt, amide, imide, tosylate and thiol groups. A mixture of several different functional groups can be used, if required.

Partly in view of their good thermal stability and their very limited sensitivity to hydrolysis, the dendritic macromolecules according to the invention can be mixed extremely well with a thermoplastic polymer or a polymer composition.

The thermoplastic polymer can be chosen from for example the group comprising polyolefines, such as polyethylene and polypropylene, polyesters, such as polyalkylene terephthalates (such as polyethylene terephthalate and polybutylene terephthalate) and polycarbonates, polyamides, such as nylon 6, nylon 4.6, nylon 8, nylon 6.10 and the like, polystyrene, polyoxymethylene, acrylonitrile-butadiene-styrene copolymers, styrene-acrylonitrile copolymers, styrene-maleimide copolymers, polysulphonic acid, polyimides, styrene-maleic anhydride copolymers, poly(methyl methacrylate), poly(vinyl alcohol), or polymer compositions of several of these polymers. This list is however by no means limitative.

Optionally, additives may be added to a mixture of dendritic macromolecules according to the invention and a thermoplastic polymer or a polymer composition. Examples of such additives are impact modifiers, stabilizers, antioxidants, lubricants, fillers, flame retardants, colourants, pigments, reinforcing fibres and conductive fibres.

The invention will be further elucidated with reference to the following examples without being limited thereto.

### Example I

1200 ml of methanol and 150 g (1.7 mol) of 1,4-diaminobutane (DAB, substrate) were introduced into a 2-litre three-necked flask equipped with a stirrer, a cooler, a thermometer and a dropping funnel. After this mixture had been cooled to a temperature of 10°C a solution of 400 g (7.6 mol) of acrylonitrile (ACN) in 100 ml of methanol was added dropwise in 2 hours. Then the reaction mixture thus obtained was heated for 16 hours (temperature 40°C).

After the mixture had subsequently cooled to room temperature both the methanol and the excess acrylonitrile were evaporated under reduced pressure. The residue thus obtained was dissolved in methanol at a temperature of 50°C, after which, after crystallization and isolation, the desired product, i.e. the desired tetranitrile, was obtained in a pure form, as white needles; the product was found to have a melting point of 52.8°C. The yield was 92%.

Analysis of the isolated product by means of ¹H and ¹³C NMR spectroscopy and mass spectrometry showed that the product obtained was DAB(ACN)₄.
¹³C NMR (50 MHz, D₂O): 119 ppm, CN; 53.1 ppm, NCH₂ (CH₂)₃; 49.4 ppm,
NCH₂ CH₂ CN; 24.9 ppm, NCH₂CH₂ CN; 16.9 ppm CH₂ CN.
¹H NMR (200 MHz, CDCl₃): 2.85 ppm, t, 2H, NCH₂CH₂CN; 2.55 ppm, m, 1H, NCH₂ (CH₂)₃; 2.48 ppm, t, 2H, CH₂CN; 1.55 ppm, m, 1H, CH2CH₂N.

### Example II

8.0 g of Raney nickel catalyst (BLM 112 W^{R} from Degussa; the composition as specified by the supplier is 85 wt.% Ni, 2.0 wt.% Fe, 2.5 wt.% Cr and 9.7 wt.% Al) was pretreated with 0.8 g of KOH dissolved in 10 ml of demineralised water. Then the catalyst was 'rinsed' three times using 50 ml of ethylenediamine (EDA). The temperature during this pretreatment was 20°C.

Then the catalyst and 100 ml of EDA were introduced into an autoclave with a volume of 160 ml. The autoclave was closed, flushed several times with H₂ gas and then heated to a temperature of 40°C, at a pressure of 60 atm. H₂, while the reactor contents were stirred.

Next, 4 g of DAB(ACN)₄ dissolved in 10 g of EDA was pressed into the autoclave with the aid of a so-called apportioning vessel that had been flushed with H₂ gas several times and had been brought to a pressure of 70 atm. The reduction reaction took place at a pressure of 70 atm. Complete reduction took 120 minutes. Analysis of the isolated product by means of ¹³C NMR spectroscopy showed that the product obtained was 1,4-diaminobutane-n,n'-tetra-1 -propylamine, DAB(PA)₄.
¹C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂ CH₂ NH₂ (4x); 23.9 ppm, NCH₂CH₂CH₂CH₂N (2x).

### Example III

Example I was repeated, only now 5.0 g of DAB(PA)₄ was used as a substrate instead of 1,4-diaminobutane.

Analysis of the isolated product by means of ¹³C NMR spectroscopy showed that the product obtained was DAB (PA)₄ (ACN)₈. The yield was 91%.
¹³C NMR (50 MHZ, CDCl₃): 118.9 ppm, CN (8x); 53.9 ppm, NCH₂CH₂CH₂CH₂ (2x); 51.5 and 51.4 ppm, NCH₂CH₂CH₂ N (8x); 49.6 ppm, NCH₂CH₂CN (8x); 25.0 and 24.9 ppm, NCH₂CH₂CH₂CH₂ and NCH₂CH₂CH₂N (6x); 16.9 ppm, CH₂CN (8x).

### Example IV

Example II was repeated, only now 2.0 g of DAB(PA)₄(ACN)₈ was reduced for 1200 minutes to obtain DAB(PA)₄ (PA)₈, as appeared from analysis of the isolated product by means of ¹³C NMR spectroscopy.
¹³C NMR (50 MHz, D₂O): 53.6 ppm, NCH₂CH₂CH₂CH₂ (2x); 51.7 ppm, NCH₂CH₂CH₂N (8x); 51.2 ppm, NCH₂CH₂CH₂NH₂ (8x); 39.6 ppm CH₂NH₂ (8x); 28.9 ppm, CH₂CH₂NH₂ (8x); 24.1 ppm, NCH₂CH₂CH₂CH₂N (2x); 22.3 ppm, NCH₂CH₂CH₂N (4x).

### Example V

Example III was repeated, only now 2.0 g of DAB(PA)₄(PA)₈ was used as a substrate instead of DAB(PA)₄.

The isolated product was analysed with the aid of ¹³C NMR spectroscopy, which showed that it was DAB(PA)₄(PA)₈ (ACN)₁₆.
¹³C NMR (50 MHz, CDCl₃): 119.0 ppm, CN (16x); 54.1 ppm, NCH₂CH₂CH₂CH₂ (2x); 52.2 ppm, NCH₂CH₂CH₂ (8x); 51.5 and 51.4 ppm, NCH₂CH₂CH₂ (16x); 49.5 ppm, NCH₂CH₂CN (16x); 25.0 and 24.9 ppm NCH₂CH₂CH₂CH₂ en NCH₂CH₂CH₂N (10x); 24.3 ppm, NCH₂CH₂CH₂N (4x); 16.9 ppm, CH₂CN (16x).

### Example VI

Example IV was repeated, only now 2.0 g of DAB(PA)₄(PA)₈(ACN)₁₆ was reduced at a temperature of 40°C for 4200 minutes to obtain DAB(PA)₄(PA)₈(PA)₁₆, as appeared from analysis of the results obtained with the aid of ¹³C NMR spectroscopy.
¹³C NMR (50 MHz, D₂O): 53.6 ppm, NCH₂CH₂CH₂CH₂ (2x); 51.7 ppm, NCH₂CH₂CH₂N (24x); 51.2 ppm, NCH₂CH₂CH₂NH₂ (16x); 39.6 ppm, CH₂ NH₂ (16x); 28.9 ppm, CH₂CH₂NH₂ (16x); 24.1 ppm, NCH₂CH₂CH₂CH₂N (2x); 22.3 ppm, NCH₂CH₂CH₂N (12x).

### Example VII

Example V was repeated, only now 3.0 g of DAB(PA)₄(PA)₈(PA)₁₆ was used as a substrate instead of DAB(PA)₄ (PA)₈.

The isolated product was analysed with the aid of ¹³C NMR spectroscopy, which showed that the product obtained was DAB(PA)₄(PA)₈(PA)₁₆(ACN)₃₂.
¹³C NMR (50 MHz, CDCl₃): 119.0 ppm, CN (32x); 54.2 ppm NCH₂CH₂CH₂CH₂ (2x); 52.2 ppm, NCH₂CH₂CH₂ (24x); 51.4 ppm, NCH₂CH₂CH₂ (32x); 49.4 ppm, NCH₂CH₂CN (32x); 24.9 ppm NCH₂CH₂CH₂CH₂ and NCH₂CH₂CH₂N (18x); 24.4 ppm, NCH₂CH₂CH₂N (12x); 16.8 ppm, CH₂CN (32x).

### Example VIII

Example VI was repeated only now 2.0 g of DAB(PA)₄(PA)₈(PA)₁₆(ACN)₃₂ was reduced for 4200 minutes at a temperature of 60°C to obtain DAB(PA)₄(PA)₈(PA)₁₆(PA)₃₂, as appeared from the analysis of the results obtained by means of ¹³C NMR spectroscopy.
¹³C NMR (50 MHz, D₂O): 51.7 ppm, NCH₂CH₂CH₂N (56x); 51.2 ppm, NCH₂CH₂CH₂NH₂ (32x); 39.6 ppm, CH₂NH₂ (32x); 28.8 ppm, CH₂CH₂NH₂ (32x); 22.3 ppm, NCH₂CH₂CH₂N (28x).

### Example IX

Example VII was repeated only now 2.0 g of DAB(PA)₄(PA)₈(PA)₁₆(PA)₃₂ was used as a substrate instead of DAB (PA)₄(PA)₈(PA)₁₆.

The product obtained was analysed with the aid of ¹³C NMR spectroscopy, which showed that it was DAB(PA)₄ (PA)₈(PA)₁₆(PA)₃₂(ACN)₆₄.
¹³C NMR (50 MHz, CDCl₃): 119.0 ppm, CN (64x); 54.2 ppm, NCH₂CH₂CH₂CH₂ (2x); 52.2 ppm, NCH₂CH₂CH₂ (56x); 51.4 ppm, NCH₂CH₂CH₂ (64x); 49.5 ppm, NCH₂CH₂CN (64x); 25.0 ppm, NCH₂CH₂CH₂CH₂ and NCH₂CH₂CH₂N (34x); 24.2 ppm, NCH₂CH₂CH₂N (28x); 16.9 ppm, CH₂CN (64x).

### Example X

Example VIII was repeated only now 2.0 g of DAB(PA)₄(PA)₈(PA)₁₆(PA)₃₂(ACN)₆₄ was reduced for 4200 minutes at a temperature of 80°C to obtain DAB(PA)₄(PA)₈(PA)₁₆(PA)₃₂(PA)₆₄, as appeared from analysis of the results obtained by means of ¹³C NMR spectroscopy.
¹³C NMR (50 MHz, D20): 51.7 ppm, NCH₂CH₂CH₂N (120x); 51.2 ppm, NCH₂CH₂CH₂NH₂ (64x); 39.6 ppm, CH₂NH₂ (64x); 28.8 ppm, CH₂CH₂NH₂ (64x); 22.3 ppm, NCH₂CH₂CH₂N (60x).

### Example XI

20 g of acrylonitrile was dissolved in 10 ml of methanol. At a temperature of 10°C this solution was then added dropwise to a solution of 5.0 g of ethanolamine (ETAM) in methanol. Then the reaction mixture was heated for 16 hours (at a temperature of 40°C). After evaporation of the solvent and washing of the residue with ether, analysis of the results of ¹H and ¹³C NMR spectroscopy showed that the reaction product obtained was dinitrile ethanol (ETAM(ACN)₂).
¹³C NMR (50 MHz, CDCl₃): 119.0 ppm, CN; 59.5 ppm, CH₂OH; 55.5 ppm, CH₂CH₂OH; 49.7 ppm, NCH₂CH₂CN; 17.4 ppm, CH₂CN.
¹H NMR (200 MHz, CDCl₃): 3.66 ppm, t, 1H, CH₂OH; 2.91 ppm, t, 2H, CH₂CH₂CN; 2.72 ppm, 1H, t, NCH₂CH₂OH; 2.53 ppm, 2H, t, CH₂CN.

### Example XII

Example II was repeated only now 2.0 g of ETAM(ACN)₂, dissolved in methanol, was used as a substrate. After 60 minutes at a temperature of 40°C complete and selective reduction appeared to have taken place in methanol and analysis of the product obtained by means of ¹³C NMR spectroscopy showed that the desired ETAM(PA)₂ had been obtained.
¹³C NMR (50 MHz, D₂O): 59.1 ppm, CH₂OH; 55.0 ppm, NCH₂CH₂OH; 51.8 ppm, NCH₂CH₂CH₂NH₂ (2x); 39.5 ppm, CH₂NH₂ (2x); 28.9 ppm, CH₂ CH₂ NH₂ (2x).

### Example XIII

At a temperature of 5°C 10 g of acrylonitrile (189 mmol) was added dropwise to 0.5 g of anion exchanger (Lewatit MP 500 MB^{R}, brought into hydroxy configuration with the aid of a 3% NaOH solution, followed by rinsing with water to a neutral pH) and 2.0 g of polyethylene glycol (PEG, Mₙ = 455, 4.4 mmol). The mixture obtained was stirred for 12 hours at a temperature of 20°C. The product obtained was filtered off and rinsed with dichloromethane. After evaporation of the dichloromethane and the excess acrylonitrile the product was washed with diethylether (three times). Analysis of the results obtained by means of ¹³C NMR spectroscopy showed that the isolated oil was PEG(ACN)₂.
¹³C NMR (50 MHz, CDCl₃):70.5 ppm, OCH₂-CH₂O; 65.9 ppm, OCH₂-CH₂CN; 18.8 ppm, CH₂CN; 118.2 ppm, CN.

### Example XIV

Example II was repeated only now 2.0 g of PEG(ACN)₂ was used as a substrate and methanol as a solvent for the reaction. After 300 minutes at a temperature of 37°C complete and selective reduction appeared to have taken place and analysis of the results obtained by means of ¹³C NMR spectroscopy showed that the desired PEG(PA)₂ had been obtained.
¹³C NMR (50 MHz, D₂O): 70.0 ppm, OCH₂-CH₂O; 69.3 ppm, OCH₂CH₂CH₂NH₂; 38.2 ppm, CH₂NH₂; 32.0 ppm, CH₂CH₂NH₂.

### Example XV

1.0 g of ε-aminocaproic acid (ε-AC, 8.0 mmol) was dissolved in 10 ml of water and deprotonated with 0.5 equivalents of K₂CO₃. At a temperature of 0°C an excess amount of acrylonitrile was then added (4 molar equivalents). Then the mixture was heated for 12 hours (at a temperature of 40°C). Analysis of the results of ¹³C NMR spectroscopy showed that the colourless oil that was obtained after evaporation of the solvents and the excess acrylonitrile was ε-AC(ACN)₂.
¹³C NMR (50 MHz, CDCl₃): 184.0 ppm, CO; 121.4 ppm, CN;, 53.0 ppm, NCH₂CH₂CH₂CH₂; 48.8 ppm, NCH₂CH₂CN; 38.1 ppm, CH₂CO; 27.0 ppm, NCH₂CH₂CH₂; 26.2/26.1 ppm CH₂CH₂CH₂CH₂CO; 15.6 ppm, CH₂CN.

### Example XVI

Example II was repeated only now 2.0 g of ε-AC(ACN)₂ was dissolved in water and used as a substrate. After 120 minutes at a temperature of 40°C complete and selective reduction appeared to have taken place and analysis of the results obtained by means of ¹³C NMR spectroscopy showed that the desired ε-AC(PA)₂ had been obtained.
¹³C NMR (50 MHz, CDCl₃): 182.6 ppm CO; 53.9 ppm, NCH₂CH₂CH₂CH₂; 51.6 ppm, NCH₂CH₂CH₂NH₂ (2x); 40.0 ppm, CH₂NH₂ (2x); 38.8 ppm, CH₂CO; 29.5 ppm, CH₂CH₂NH₂ (2x); 27.8 ppm, NCH₂CH₂; 26.5 ppm/25.8 ppm, NCH₂CH₂CH₂CH₂CH₂.

### Example XVII

Example II was repeated only now n-butanol was used as a rinsing agent for the catalyst and as a solvent for the substrate and for the reaction. After 180 minutes' reaction at a temperature of 40°C complete and selective reduction appeared to have taken place to the desired DAB(PA)₄.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XVIII

Example II was repeated only now the catalyst was rinsed with tetrahydrofuran (THF). Then 2.0 g of DAB(ACN)₄ was dissolved in THF and THF was also used as a solvent for the reaction. A H₂ pressure of 30 atmosphere was used and a temperature of 80°C. After 120 minutes' reaction complete and selective reduction appeared to have taken place to the desired DAB(PA)₄.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XIX

Example XVIII was repeated only now use was made of a reaction temperature of 40°C. After 240 minutes' reaction complete and selective reduction to the desired DAB(PA)₄ appeared to have taken place.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XX

8.0 g of Raney nickel catalyst (BLM 112 W^{R} from Degussa; the composition contains 85 wt.% Ni, 2.0 wt.% Fe, 2.5 wt.% Cr and 9.7 wt.% Al) was pretreated with KOH in the same manner as in example II. After this pretreatment the catalyst was rinsed once with 50 ml of demineralised water. Then the catalyst was transferred to the autoclave along with 100 ml of demineralised water, after which the autoclave was flushed with H₂ gas and heated to a temperature of 60°C. Then 4.0 g of DAB(ACN)₄ was dissolved in 5.0 ml of methanol and transferred to the autoclave. In 90 minutes, at a H₂ pressure of 70 atmosphere, complete and selective reduction to DAB(PA)₄ took place.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XXI

Example XX was repeated only Raney Cobalt (type Grace 2724^{R}, promoted with Cr) was used as a catalyst. After 15 minutes' reaction complete and selective reduction to the desired DAB(PA)₄ had taken place.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XXII

10 g of melamine(1,3,5-trishexamethyleneamine) (23.6 mmol MEL(HMA)₃) was dissolved in 150 ml of methanol. The solution obtained was added to 15 g of acrylonitrile (283 mmol) at a temperature of 0°C. The mixture thus obtained was stirred for 1 hour at a temperature of 20°C and then for 12 hours at a temperature of 45°C. The solvent and the excess acrylonitrile were removed at reduced pressure with the aid of a Rotavapor at a temperature of 40°C. The results of ¹³C NMR spectroscopic analysis showed that the product obtained after precipitation in diethylether and isolation, a viscous red oil, was pure MEL(HMA)₃(ACN)₆.
¹³C NMR (50 MHz, CDCl₃): 165.8 ppm, NCN (3x); 118.7 ppm, CN (6x); 53.4 ppm, NCH₂CH₂CH₂CH₂ (3x); 49.6 ppm, NCH₂CH₂CN (6x); 40.5 ppm, NHCH₂ (3x); 29.7 ppm, NHCH₂CH₂ (3x); 27.3 ppm, 26.8 ppm, 26.7 ppm, NCH₂CH₂CH₂CH₂CH₂CH₂NH (9x); 17.0 ppm, CH₂CN (6x).

### Example XXIII

Example XX was repeated only now 2.3 g of MEL(HMA)₃(ACN)₆ was dissolved as a substrate. The reduction reaction was carried out at a temperature of 60°C. The ¹³C and ¹H NMR spectra showed that complete and selective reduction to the desired melamine(HMA)₃(PA)₆ had taken place after 1020 minutes' reaction.
¹³C NMR (50 MHz, D₂O): 165.7 ppm, NCN (3x); 53.7 ppm, NCH₂CH₂CH₂CH₂ (3x); 51.3 ppm, NCH₂CH₂NH₂ (6x); 40.8 ppm, NHCH₂ (3x); 39.7 ppm, CH₂NH₂ (6x); 29.8 ppm, NHCH₂CH₂ (3x); 29.1 ppm, CH₂CH₂NH₂ (6x); 27.6 ppm, 26.9 ppm, 25.6 ppm, NCH₂CH₂CH₂CH₂CH₂CH₂NH (9x).

### Example XXIV

25 g of Jeffamine D-2000^{R} (a modified polypropylene oxide, M_{w} = 2000, Texaco Chemical Company) was dissolved in 50 ml of methanol. The solution obtained was added to 6.0 g of acrylonitrile at a temperature of 0°C. The resultant mixture was stirred for 1 hour at a temperature of 20°C and then for 12 hours at a temperature of 40°C. Then the product obtained was dissolved in a mixture of 100 ml of pentane and 5.0 ml of diethylether. The results of ¹³C NMR spectroscopic analysis showed that the product obtained after isolation was Jeff(ACN)₄ (a colourless liquid; yield 94%).
¹³C NMR (50 MHz, CDCl₃): 118.7 ppm, CN; 75.1-75.7 ppm, OCH₂; 73.0-73.6 ppm, NCH; 52.2-52.5 ppm, NCH₂CH₂CN; 17.2-17.5 ppm, CCH₃; 19.1 ppm, CH₂CN.

### Example XXV

8.0 g of Raney Nickel catalyst (BLM 112 W^{R} from Degussa; the composition contains 85 wt.% Ni, 2.0 wt.% Fe, 2.5 wt.% Cr and 9.7 wt.% Al) was pretreated with 0.8 g of KOH dissolved in 10 ml of demineralised water. After precipitation of the catalyst thus obtained the water layer was decanted and then 50 ml of ethylenediamine was added while the mixture was stirred. Then the catalyst thus washed was filtered off and was added to 100 ml of ethylenediamine in a 160-ml autoclave. The autoclave was closed and was flushed several times with H₂ gas. Next, 70-bar H₂ gas was introduced into the autoclave, at a temperature of 38°C, and the contents were intensively stirred.

Then 2.0 g of Jeff(ACN)₄, dissolved in 10 g of ethylenediamine, was introduced into the autoclave. Complete reduction was found to have taken place after 3 hours. ¹³C NMR spectroscopy showed that the product obtained was pure Jeff(PA)₄.
¹³C NMR (50 MHz, D₂O): 74.8-75.9 ppm, OCH₂; 72.4-73.3 ppm, NCH; 53.0-52.7 ppm, NCH₂CH₂NH₂; 39.1 ppm, CH₂NH₂; 32.3 ppm, CH₂CH₂NH₂; 16.5-17.3 ppm, CCH₃.

### Example XXVI

900 ml of water and 75 g (0.85 mol) of 1,4-diaminobutane (substrate) were introduced into a three-necked flask with a volume of 2 litres, which was fitted with a stirrer, a cooler, a thermometer and a dropping funnel. After this mixture had been cooled to a temperature of 10°C, a solution of 200 g (3.8 mol) of acrylonitrile was added dropwise in 2 hours. Then the reaction mixture thus obtained was heated for 9 hours (temperature 65°C).

After the mixture had then cooled to room temperature the water and the excess acrylonitrile were azeotropically evaporated. The residue thus obtained, which contained DAB(ACN)₄ and water, was then reduced with the aid of Raney cobalt catalyst that had not been pretreated. the reaction was stopped after 1 hour, after which the desired product was obtained as a colourless oil. Analysis of the product by means of ¹³C NMR spectroscopy showed that pure DAB(PA)₄ had been formed. The yield was 98%.
¹³C NMR (50 MHz, D₂O): 53.4 ppm, NCH₂CH₂CH₂CH₂ (2x); 51.1 ppm, NCH₂CH₂CH₂NH₂ (4x); 39.5 ppm, CH₂NH₂ (4x); 28.8 ppm, CH₂CH₂NH₂ (4x); 23.9 ppm, NCH₂CH₂CH₂CH₂N (2x).

### Example XXVII

The thermal stability of the dendritic macromolecules obtained in examples I through VIII was measured via ThermoGraphic Analysis (TGA). This was done by heating approx. 2.5 mg of the product in question with the aid of a Perkin Elmer (7-series) in a neon atmosphere from 30°C to 900°C, at a rate of 20°C/min. Table 1 shows the temperatures at which maximum decomposition of the product takes place.

**Table 1**

| Results of the TGA of the products obtained in examples I through VII. | |
|---|---|
| Product | Temperature [°C] |
| DAB(ACN)₄ | 330.1 |
| DAB(PA)4 | 330.0 |
| DAB(PA)₄(ACN)₈ | 331.8 |
| DAB(PA)₄(PA)₈ | 378.0 |
| DAB(PA)₄(PA)₈(ACN)₁₆ | 332.0 |
| DAB(PA)₄(PA)₈(PA)₁₆ | 424.0 |
| DAB(PA)₄(PA)₈(PA)₁₆(ACN)₃₂ | 331.5 |

### Example XXVIII

900 ml of water and 75 g (0.85 mol) of diaminobutane were introduced into a 2-litre three-necked flask fitted with a stirrer, a cooler, a thermometer and a dropping funnel. After this mixture had been cooled to a temperature of 10°C, a solution of 200 g of acrylonitrile in 50 ml of methanol was added dropwise, at such a rate that the temperature of the reaction mixture remained below 15°C. After the entire amount had been added the reaction mixture was kept at room temperature for two hours, after which it was heated to a temperature of 65°C for 9 hours. Then the reaction mixture was cooled to room temperature and the product obtained was isolated.

The results of ¹H and ¹³C NMR spectroscopy and mass spectrometry showed that the isolated product was DAB (ACN)₄.
¹³C NMR (50 MHz, D₂O): 119 ppm, CN; 53.1 ppm, NCH₂(CH₂)₃; 49.4 ppm, NCH₂CH₂CN; 24.9 ppm, NCH₂CH₂ CN; 16.9 ppm CH₂CN.
¹H NMR (200 MHz, CDCl₃): 2.85 ppm, t, 2H, NCH₂CH₂CN; 2.55 ppm, m, 1H, NCH₂(CH₂)₃; 2.48 ppm, t, 2H, CH₂CN; 1.55 ppm, m, 1H CH₂CH₂N.

### Example XXIX

30 ml of water and 5.0 g (58 mmol) of diaminobutane were introduced into a three-necked flask with a volume of 250 ml that was fitted with a stirrer, a cooler, a thermometer and a dropping funnel. After the mixture had been cooled to a temperature of 10°C, a solution of 15 g (280 mmol) of acrylonitrile was added dropwise, at such a rate that the temperature remained below 15°C. After the entire solution had been added, the mixture was kept at room temperature for two hours, after which the reaction mixture was heated to a temperature of 45°C for 16 hours.

After cooling of the reaction mixture to room temperature the water and the excess acrylonitrile were evaporated. 2.5 g of the product obtained (DAB(ACN)₄) was dissolved in 4 ml of methanol. This solution was introduced into a 160-ml autoclave along with 8.0 g of Raney cobalt catalyst (type Grace 2724^{R}, promoted with Cr). Then the autoclave was closed, flushed several times with H₂ gas and heated to a temperature of 80°C under 30 atmosphere H₂ pressure, with stirring of the reactor contents. These reaction conditions were maintained for one hour.

After removal of the catalyst through filtration, and evaporation of the water, 2.0 g of the residue (DAB(PA)₄) was dissolved in 20 ml of water, to which solution 5.4 g of acrylonitrile was added dropwise, at a temperature of 10°C. The mixture was kept at room temperature for two hours, after which it was heated for 16 hours at a temperature of 40°C. After cooling the water and the excess acrylonitrile were evaporated under reduced pressure. The colourless residue thus obtained (pure DAB(PA)₄(ACN)₈) was then reduced in the same manner as DAB(ACN)₄ as described in this example. Complete and selective reduction took place within 90 minutes.

The DAB(PA)₄(PA)₈ thus formed was dissolved in 30 ml of water. Next, 5.0 g of acrylonitrile was added dropwise at a temperature of 10°C. Then the reaction mixture was kept at room temperature for two hours, after which it was heated to 40°C for 16 hours. After cooling, the water and the excess acrylonitrile were evaporated under reduced pressure, after which the colourless residue, i.e.

DAB(PA)₄(PA)₈(ACN)₁₆, was completely and selectively reduced to DAB(PA)₄(PA)₈(PA)₁₆ in two hours, in the manner described in this example for the reduction of DAB(ACN)₄.

### Example XXX

Ethylacrylate (EAC, 6.3 g; 63 mmol) was dissolved in 20 ml of methanol. The solution obtained was cooled in an ice bath, while 0.5 g of DAB(PA)₄ was added with stirring. The resulting mixture was stirred at room temperature for 20 hours, after which the product, a light yellow liquid, was isolated. ¹³C NMR spectroscopic analysis of the product showed that pure DAB(PA)₄ (EAC)₈ had been formed.
¹³C NMR (50 MHz, CDCl₃): 172.5 ppm, CO (8x); 60.2 ppm, COOCH₂ (8x); 54.1 ppm, NCH₂CH₂CH₂CH₂ (2x); 51.9 ppm, NCH₂CH₂CH₂N (8x); 49.1 ppm, NCH₂CH₂CO (8x); 32.6 ppm, CH₂CO (8x); 25.0 ppm, NCH₂CH₂CH₂CH₂ (2x); 24.7 ppm, NCH₂CH₂CH₂N (4x); 14.2 ppm, CH₃ (8x).

### Example XXXI

DAB(PA)₄(EAC)₈ (0.5 g, 0.45 mmol) was dissolved in 3.0 ml of methanol. The solution obtained was cooled to a temperature of 0°C with the aid of an ice bath, while a large excess of ethanolamine (EA) was added dropwise. Then the product was isolated. ¹³C NMR spectroscopic analysis of the product, a yellow oil, showed that pure DAB(PA)₄(EA)₈ had been formed.
¹³C NMR (50 MHz, D₂O): 175.6 ppm, CONH (8x); 60.3 ppm, CH₂OH (8x); 53.3 ppm, CH₂CH₂CH₂CH₂ (2x); 51.5 ppm en 51.2 ppm, NCH₂CH₂CH₂N (8X); 49.1 ppm, NCH₂CH₂CO (8x); 41.8 ppm, CONHCH₂ (8x); 32.9 ppm, CH₂CO (8x); 24.0 ppm, NCH₂CH₂CH₂CH₂ (2x).

The examples show that different generations of dendritic macromolecules according to the invention can be synthesized. The synthesized macromolecules according to the invention are not sensitive to degradation through hydrolysis reactions. The synthesis can be carried out in various solvents, using different catalysts and different reaction conditions. It has also been shown that it is possible to carry out the various reaction steps after one another without having to isolate the (intermediate) product obtained after each individual step, which means that it is very simple to scale up the process. The outermost generation of the dendritic macromolecules can be modified with several functional groups. Finally, it has been shown that the dendritic macromolecules according to the invention have very good thermal stability.

## Claims

1. Dendritic macromolecule containing a core and branches emanating from the core, characterized in that the branches contain units derived from vinylcyanide compounds, that the molecular weight of the dendritic macromolecule is at least 1600, and that the number of generations N is higher than 1.

2. Dendritic macromolecule containing a core and branches emanating from the core, characterized in that the branches contain units derived from vinylcyanide. compounds and in that the number of generations, N, is between 3 and 10.

3. Dendritic macromolecule according to any one of claims 1-2, characterized in that the core is a molecule that contains 1-10 functional groups which each, independently of one another, have a functionality of 1, 2 or 3.

4. Dendritic macromolecule according to any one of claims 1-2, characterized in that the core is a (co)polymer that contains at least one functional group, which functional group(s), independently of one another, have a functionality of 1, 2 or 3.

5. Dendritic macromolecule according to any one of claims 1-4, characterized in that the core contains a hydroxyl group, a primary amine group and/or a secondary amine group as functional group.

6. Dendritic macromolecule according to any one of claims 1-5, characterized in that the core is chosen from the group comprising polymethylene diamines, glycols and tris(1,3,5-aminoethyl)benzene.

7. Dendritic macromolecule according to any one of claims 1-6, a number of generations of branches being present, characterized in that the number of branches of the N^{th} generation is larger than the number of reactive sites R of the core and smaller than or the same as the number of reactive sites R of the core multiplied by 2^{N-1}.

8. Dendritic macromolecule according to any one of claims 1-7, characterized in that the monomeric vinyl-cyanide compound is acrylonitrile or methacrylonitrile.

9. Dendritic macromolecule containing a core and branches emanating from the core, whose branches contain units according to the formula 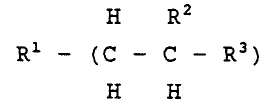 where
R¹ = the core or a unit of the previous generation;
R² = -H or -CH₃;
R³ = 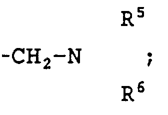
R⁵ = H or a unit of the next generation;
R⁶ = H or a unit of the next generation,
where groups R⁵ and R⁶ in every 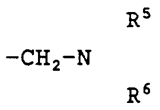 group may be the same or may differ from one another
and the molecular weight is at least 1600 and the number of generations is higher than 1, or in which the number of generation is 3-10.

10. Dendritic macromolecule according to any one of claims 1-9, characterized in that it is entirely or partly modified with functional groups.

11. Dendritic macromolecule according to claim 10, characterized in that the functional groups are chosen from the group comprising unsaturated aliphatic esters and amides, acid halides, alkyl halides, aryl halides, tosyl halides, anhydrides, dicarboxylic acids and (a)cyclic aldehydes.

12. Dendritic macromolecule according to any one of claims 1-11, characterized in that the molecular weight is between 1600 and 100,000.

13. Process for the preparation of a dendritic macromolecule containing a core and branches, characterized in that the process comprises steps a) through c):
a) substantially every functional group of the core is caused to react with a monomeric vinyl-cyanide compound;
b) substantially every incorporated nitrile group is reduced to an amine group in the presence of a heterogeneous reduction catalyst;
c) substantially every amine group is caused to react with a monomeric vinyl-cyanide compounds;
where steps b) and c) are carried out alternately in order to obtain a macromolecule with a molecular weight of at least 1600 and in which the number of generations is higher than 1, or in which the number of generations N is 3-10.

14. Process for the preparation of a dendritic macromolecule containing a core and branches, characterized in that the process comprises steps a) through c):
a) substantially every functional group of the core is caused to react with a monomeric vinyl-cyanide compound;
b) substantially every incorporated nitrile group is reduced to an amine group in the presence of a heterogeneous reduction catalyst, which catalyst comprises at least a metal from group VIII of the periodic system of the elements, and H₂ gas;
c) substantially every amine group is caused to react with a monomeric vinyl-cyanide compound;
where steps b) and c) are alternately carried out (N-1) times in order to obtain a macromolecule of the desired generation N, N being between 2-10.

15. Process according to any one of claims 13-14, characterized in that during steps a) and/or c) the ratio of the number of monomeric vinyl-cyanide compounds to the number of reactive sites is at least 1.

16. Process according to any one of claims 13-15, characterized in that:
a) at least 95% of the functional groups of the core is caused to react with a monomeric vinyl-cyanide compound;
b) at least 95% of the incorporated nitrile groups is reduced to an amine group;
c) at least 95% of the amine groups is caused to react with a monomeric vinyl-cyanide compound.

17. Process according to claim 16, characterized in that:
a) at least 99% of the functional groups of the core is caused to react with a monomeric vinyl-cyanide compound;
b) at least 99% of the incorporated nitrile groups is reduced to an amine group;
c) at least 99% of the amine groups is caused to react with a monomeric vinyl-cyanide compound.

18. Process according to any one of claims 13-17, characterized in that step b) is carried out in the presence of a reducing catalyst, which comprises at least a metal from the group consisting of nickel, cobalt, platinum, palladium and rhodium.

19. Process according to claim 18, characterized in that the catalyst is chosen from the group comprising Raney nickel and Raney cobalt.

20. Process according to claim 19, characterized in that use is made of 1-35 wt.% catalyst, relative to the total weight of the reaction mixture.

21. Process according to any one of claims 13-20, characterized in that step b) is carried out in a H₂ atmosphere at a hydrogen pressure between 1 and 500 bar and a temperature of between 20 and 200°C.

22. Process according to any one of claims 13-21, characterized in that the reaction steps take place in water, methanol, or a mixture of the two.

## Patentansprüche

1. Dendritisches Makromolekül, welches einen Kern und vom Kern ausgehende Verzweigungen enthält, dadurch gekennzeichnet, daß die Verzweigungen Einheiten enthalten, die von Vinylcyanid-Verbindungen abgeleitet sind, daß die Molmasse des dendritischen Makromoleküls zumindest 1600 beträgt, und daß die Anzahl der Generationen N größer ist als 1.

2. Dendritisches Makromolekül, welches einen Kern und vom Kern ausgehende Verzweigungen enthält, dadurch gekennzeichnet, daß die Verzweigungen Einheiten enthalten, die von Vinylcyanid-Verbindungen abgeleitet sind, und daß die Anzahl der Generationen, N, zwischen 3 und 10 beträgt.

3. Dendritisches Makromolekül nach einem der Ansprüche 1 oder 2, dadurch gekennzeichnet, daß der Kern ein Molekül ist, das 1 bis 10 funktionelle Gruppen enthält, die jeweils, unabhängig voneinander, eine Funktionalität von 1, 2 oder 3 aufweisen.

4. Dendritisches Makromolekül nach einem der Ansprüche 1 oder 2, dadurch gekennzeichnet, daß der Kern ein (Co-) Polymer ist, das zumindest eine funktionelle Gruppe enthält, welche funktionelle(n) Gruppe(n), unabhängig voneinander, eine Funktionalität von 1, 2 oder 3 aufweist (aufweisen).

5. Dendritisches Makromolekül nach einem der Ansprüche 1 bis 4, dadurch gekennzeichnet, daß der Kern eine Hydroxyl-Gruppe, eine primäre Amin-Gruppe und/oder eine sekundäre Amin-Gruppe als funktionelle Gruppe enthält.

6. Dendritisches Makromolekül nach einem der Ansprüche 1 bis 5, dadurch gekennzeichnet, daß der Kern ausgewählt ist aus der Gruppe umfassend Polymethylendiamine, Glykole und Tris-(1,3,5-aminoethyl)-benzol.

7. Dendritisches Makromolekül nach einem der Ansprüche 1 bis 6, wobei eine Anzahl von Verzweigungsgenerationen vorliegt, dadurch gekennzeichnet, daß die Anzahl von Verzweigungen der N.ten Generation größer ist als die Anzahl reaktiver Stellen R des Kerns und kleiner oder gleich der Anzahl reaktiver Stellen R des Kerns multipliziert mit 2^{N-1}.

8. Dendritisches Makromolekül nach einem der Ansprüche 1 bis 7, dadurch gekennzeichnet, daß die monomere Vinylcyanid-Verbindung Acrylnitril oder Methacrylnitril ist.

9. Dendritisches Makromolekül, welches einen Kern und vom Kern ausgehende Verzweigungen enthält, dessen Verzweigungen Einheiten der Formel enthalten: 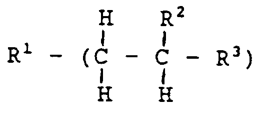 worin
R¹ = der Kern oder eine Einheit der vorhergehenden Generation;
R² = -H oder -CH₃;
R³ = 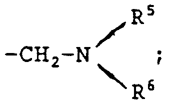
R⁵ = H oder eine Einheit der nächsten Generation;
R⁶ = H oder eine Einheit der nächsten Generation;
wobei Gruppen R⁵ und R⁶ in jeder Gruppe 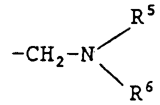 gleich sein können oder sich voneinander unterscheiden können, und die Molmasse zumindest 1600 beträgt, und die Anzahl der Generationen größer ist als 1, oder worin die Anzahl von Generationen 3 bis 10 beträgt.

10. Dendritisches Makromolekül nach einem der Ansprüche 1 bis 9, dadurch gekennzeichnet, daß es zur Gänze oder teilweise mit funktionellen Gruppen modifiziert ist.

11. Dendritisches Makromolekül nach Anspruch 10, dadurch gekennzeichnet, daß die funktionellen Gruppen ausgewählt sind aus der Gruppe umfassend ungesättigte aliphatische Ester und Amide, Säurehalogenide, Alkylhalogenide, Arylhalogenide, Tosylhalogenide, Anhydride, Dicarbonsäuren und (a)cyclische Aldehyde.

12. Dendritisches Makromolekül nach einem der Ansprüche 1 bis 11, dadurch gekennzeichnet, daß die Molmasse zwischen 1600 und 100 000 beträgt.

13. Verfahren zur Herstellung eines dendritischen Makromoleküls, das einen Kern und Verzweigungen enthält, dadurch gekennzeichnet, daß das Verfahren die Schritte a) bis c) umfaßt:
a) im wesentlichen jede funktionelle Gruppe des Kerns wird mit einer monomeren Vinylcyanid-Verbindung zum Reagieren gebracht;
b) im wesentlichen jede eingeschlossene Nitril-Gruppe wird in Anwesenheit eines heterogenen Reduktionskatalysators zu einer Amin-Gruppe reduziert;
c) im wesentlichen jede Amin-Gruppe wird mit einer monomeren Vinylcyanid-Verbindung zum Reagieren gebracht;
wobei die Schritte b) und c) abwechselnd durchgeführt werden, um ein Makromolekül mit einer Molmasse von zumindest 1600 und worin die Anzahl der Generationen größer ist als 1, oder worin die Anzahl von Generationen N 3 bis 10 beträgt, zu erhalten.

14. Verfahren zur Herstellung eines dendritischen Makromoleküls, das einen Kern und Verzweigungen enthält, dadurch gekennzeichnet, daß das Verfahren die Schritte a) bis c) umfaßt:
a) im wesentlichen jede funktionelle Gruppe des Kerns wird mit einer monomeren Vinylcyanid-Verbindung zum Reagieren gebracht;
b) im wesentlichen jede eingeschlossene Nitril-Gruppe wird in Anwesenheit eines heterogenen Reduktionskatalysators, welcher Katalysator zumindest ein Metall der Gruppe VIII des Periodensystems der Elemente umfaßt, und von H₂-Gas zu einer Amin-Gruppe reduziert;
c) im wesentlichen jede Amin-Gruppe wird mit einer monomeren Vinylcyanid-Verbindung zum Reagieren gebracht; wobei die Schritte b) und c) abwechselnd (N-1)-mal durchgeführt werden, um ein Makromolekül der gewünschten Generation N zu erhalten, wobei N zwischen 2 und 10 beträgt.

15. Verfahren nach einem der Ansprüche 13 oder 14, dadurch gekennzeichnet, daß während der Schritte a) und/oder c) das Verhältnis der Anzahl monomerer Vinylcyanid-Verbindungen zur Anzahl reaktiver Stellen zumindest 1 beträgt.

16. Verfahren nach einem der Ansprüche 13 bis 15, dadurch gekennzeichnet, daß:
a) zumindest 95 % der funktionellen Gruppen des Kerns mit einer monomeren Vinylcyanid-Verbindung zum Reagieren gebracht werden;
b) zumindest 95 % der eingeschlossenen Nitril-Gruppen zu einer Amin-Gruppe reduziert werden;
c) zumindest 95 % der Amin-Gruppen mit einer monomeren Vinylcyanid-Verbindung zum Reagieren gebracht werden.

17. Verfahren nach Anspruch 16, dadurch gekennzeichnet, daß
a) zumindest 99 % der funktionellen Gruppen des Kerns mit einer monomeren Vinylcyanid-Verbindung zum Reagieren gebracht werden;
b) zumindest 99 % der eingeschlossenen Nitril-Gruppen zu einer Amin-Gruppe reduziert werden;
c) zumindest 99 % der Amin-Gruppen mit einer monomeren Vinylcyanid-Verbindung zum Reagieren gebracht werden.

18. Verfahren nach einem der Ansprüche 13 bis 17, dadurch gekennzeichnet, daß Schritt b) in Anwesenheit eines Reduktionskatalysators, der zumindest ein Metall der Gruppe bestehend aus Nickel, Kobalt, Platin, Palladium und Rhodium umfaßt, durchgeführt wird.

19. Verfahren nach Anspruch 18, dadurch gekennzeichnet, daß der Katalysator ausgewählt wird aus der Gruppe umfassend Raney-Nickel und Raney-Kobalt.

20. Verfahren nach Anspruch 19, dadurch gekennzeichnet, daß 1 bis 35 Masse-% Katalysator, bezogen auf die Gesamtmasse der Reaktionsmischung, verwendet werden.

21. Verfahren nach einem der Ansprüche 13 bis 20, dadurch gekennzeichnet, daß Schritt b) in einer H₂-Atmosphäre bei einem Wasserstoffdruck zwischen 1 und 500 bar und einer Temperatur zwischen 20 und 200°C durchgeführt wird.

22. Verfahren nach einem der Ansprüche 13 bis 21, dadurch gekennzeichnet, daß die Reaktionsschritte in Wasser, Methanol oder einer Mischung von beidem stattfinden.

## Revendications

1. Macromolécule dendritique contenant un noyau et des ramifications émanant du noyau, caractérisée en ce que les ramifications contiennent des unités dérivées de composés de vynile-cyanure, en ce que la masse moléculaire de la macromolécule dendritique est d'au moins 1.600 et en ce que le nombre de générations N est supérieur à 1.

2. Macromolécule dendritique contenant un noyaux et des ramifications qui émanent du noyaux, caractérisée en ce que les ramifications contiennent des unités dérivées de composés de vynile-cyanure et en ce que le nombre de générations N est compris entre 3 et 10.

3. Macromolécule dendritique selon l'une des revendications 1 - 2, caractérisée en ce que le noyau est une molécule qui contient de 1 à 10 groupes fonctionnels, chacun de ces groupes, indépendamment l'un de l'autre, ayant une fonctionnalité 1, 2 ou 3.

4. Macromolécule dendritique selon l'une des revendications 1 - 2, caractérisée en ce que le noyau est un (co)polymère qui contient au moins un groupe fonctionnel, ledit (lesdits) groupe(s) fonctionnel(s) ayant, chacun de façon indépendante l'un de l'autre, une fonctionnalité 1, 2 ou 3.

5. Macromolécule dendritique selon l'une des revendications 1 - 4, caractérisée en ce que le noyau contient un groupe hydroxyle, un groupe amine primaire et/ou un groupe amine secondaire en tant que groupe fonctionnel.

6. Macromolécule dendritique selon l'une des revendications 1 - 5, caractérisée en ce que le noyau est sélectionné à partir du groupe composé des polyméthylènes diamines, des glycols et du tris(1,3,5-aminoéthyl)benzène.

7. Macromolécule dendritique selon l'une des revendications 1 - 6, avec un nombre de générations qui sont présentes, caractérisée en ce que le nombre de ramifications de la Nième génération est plus grand que le nombre de sites réactifs R du noyau et plus petit ou égal au nombre de sites réactifs R du noyau multiplié par 2N-1.

8. Macromolécule dendritique selon l'une des revendications 1 - 7, caractérisé en ce que le composé monomère de vynile-cyanure est de l'acrylonitrile ou du méthacrylonitrile.

9. Macromolécule dendritique contenant un noyaux et des ramification émanant du noyaux, dont les ramifications contiennent des unités en accord avec la formule suivante : 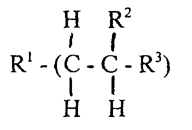 où
R¹ = le noyau ou une unité de la génération précédente
R² = -H ou -CH₃
R³ = 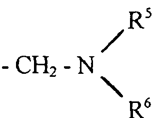
R⁵ = H ou une unité de la génération suivante
R⁶ = H ou une unité de la génération suivante, ou les groupes R⁵ et R⁶ de chacun des groupes 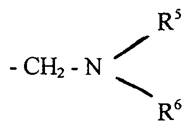
peuvent être identiques ou différer les uns des autres et
la masse moléculaire est d'au moins 1.600 et le nombre de générations est supérieur à 1, ou dans laquelle le nombre de générations est de 3 - 10.

10. Macromolécule dendritique selon l'une des revendications 1 - 9, caractérisée en ce qu'elle est entièrement ou partiellement modifiée avec des groupes fonctionnels.

11. Macromolécule dendritique selon la revendication 10, caractérisée en ce que les groupes fonctionnels sont sélectionnés à partir du groupe composé des esters aliphatiques insaturés, des amides, des halogénures acides, des halogénures d'alkyles, des halogénures d'aryles, des halogénures de tosyles, des anhydrides, des acides dicarboxyliques et des aldéhydes (a)cycliques.

12. Macromolécule dendritique selon l'une des revendications 1 - 11,
caractérisée en ce que la masse moléculaire est comprise entre 1.600 et 100.000.

13. Procédé de préparation d'une macromolécule dendritique contenant un noyau et des ramifications, caractérisé en ce que le procédé comprend les étapes a) à c) consistant à :
a) faire réagir substantiellement chaque groupe fonctionnel du noyau avec un composé monomère de vinyle-cyanure ;
b) réduire substantiellement chaque groupe de nitrile incorporé en un groupe amine en présence d'un catalyseur de réduction hétérogène ;
c) faire réagir substantiellement chaque groupe amine avec un composé monomère de vinyle-cyanure ;
dont les étapes b) et c) sont effectuées en alternance afin d'obtenir une macromolécule ayant une masse moléculaire d'au moins 1.600 et dans lequel le nombre de générations est supérieur à 1, ou dans lequel le nombre de génération N est de 3 - 10.

14. Procédé de préparation d'une macromolécule dendritique contenant un noyau et des ramifications, caractérisé en ce que le procédé comprend les étapes a) à c) consistant à :
a) faire réagir substantiellement chaque groupe fonctionnel du noyau avec un composé monomère de vinyle-cyanure ;
b) réduire substantiellement chaque groupe de nitrile incorporé en un groupe amine en présence d'un catalyseur de réduction hétérogène, ledit catalyseur comprenant au moins un métal du groupe VIII du système périodique des éléments, et du gaz H₂;
c) faire réagir substantiellement chaque groupe amine avec un composé monomère de vinyle-cyanure ;
dont les étapes b) et c) sont effectuées en alternance (N⁻¹) fois afin d'obtenir une macromolécule de la génération N désirée, N étant compris entre 2 et 10.

15. Procédé selon l'une des revendications 13 - 14, caractérisé en ce que pendant les étapes a) et/ou c), le rapport entre le nombre de composés monomères de vynile-cyanure et le nombre de sites réactifs est d'au moins 1.

16. Procédé selon l'une des revendications 13 - 15, caractérisé en ce que :
a) on fait réagir au moins 95 % des groupes fonctionnels du noyau avec un composé monomère de vynile-cyanure ;
b) on fait réduire au moins 95 % des groupes nitrile incorporés en un groupe amine ;
c) on fait réagir 95 % des groupes amine avec un composé monomère de vinyle-cyanure.

17. Procédé selon la revendication 16, caractérisé en ce que :
a) on fait réagir au moins 99 % des groupes fonctionnels du noyau avec un composé monomère de vinyle-cyanure ;
b) on fait réduire au moins 99 % des groupes nitrile incorporés en un groupe amine ;
c) on fait réagir 99 % des groupes amine avec un composé monomère de vinyle-cyanure.

18. Procédé selon l'une des revendications 13 - 17, caractérisé en ce que l'étape b) est effectué en présence d'un catalyseur de réduction qui comprend au moins un métal sélectionné dans le groupe composé du nickel, du cobalt, du platine, du palladium et du rhodium.

19. Procédé selon la revendication 19, caractérisé en ce que le catalyseur est sélectionné dans le groupe comprenant le nickel de Raney et le cobalt de Raney.

20. Procédé selon la revendication 19, caractérisé en ce qu'on utilise de 1 à 35 % en masse de catalyseur par rapport à la masse totale du mélange de réaction.

21. Procédé selon l'une des revendications 13 - 20, caractérisé en ce que l'étape b) est menée sous atmosphère de H2 à une pression d'hydrogène comprise entre 1 et 500 bars et à une température comprise entre 20 et 200°C.

22. Procédé selon l'une des revendications 13 - 21, caractérisé en ce que les étapes de réaction on lieu dans de l'eau, du méthanol ou un mélange des deux.
